# FASCICULE DE BREVET EUROPEEN

(11) **EP 2 253 743 B1**
(45) Date de publication et mention de la délivrance du brevet: **18.09.2013**
(21) Numéro de dépôt: 10172519.0
(22) Date de dépôt: 28.11.2008
(51) Int. Cl.: C25B 9/10, C25B 11/04

(54) **Cellule pour électrolyse de l'eau avec électrolyte solide contenant peu ou pas de métaux nobles**
Wasserelektrolysezelle mit festem Elektrolyt, die wenig oder gar keine Edelmetalle enthält
Cell for electrolysing water with a solid electrolyte containing few or zero noble metals.

(30) Priorité: 30.11.2007 FR 0708391
(43) Date de publication de la demande: 24.11.2010
(62) Demande divisionnaire de: 08872254.1
(73) Titulaire: Université Paris Sud, 91405 Orsay Cedex (FR); Centre National de la Recherche Scientifique (CNRS), 75794 Paris Cedex 16 (FR)
(72) Inventeur: Anxolabehere-Mallart, Elodie, 75012 PARIS (FR); Aukauloo, Ally, 91300 MASSY (FR); Lu, Yuwei, 91400 ORSAY (FR); Millet, Pierre, 91140 VILLEBON SUR YVETTE (FR); Ranjbari, Alireza, 92130 ISSY-LES-MOULINEAUX (FR); Pantani, Olivier, 94250 Gentilly (FR)
(74) Mandataire: Mazabraud, Xavier

(56) Documents cités:
- US-A- 3 375 139
- O. PANTANI ET AL.: "Electroactivity of cobalt and nickel complexes for the reduction of protons into di-hydrogen. Application to PEM water electrolysis" [Online] 13 juin 2006 (2006-06-13), , XP002538425 Extrait de l'Internet: URL:genhypem.u-psud.fr/publis/PANTANI_317. pdf> [extrait le 2009-07-22] * alinéas [03.1], [03.D], [0004]; figure 2 *
- O. PANTANI ET AL.: "Electroactivity of cobalt and nickel glyoximes with regard to the electro-reduction of protons into molecular hydrogen in acidic media" ELECTROCHEMISTRY COMMUNICATIONS, vol. 9, 22 septembre 2006 (2006-09-22), pages 54-58, XP002538424
- T. MEHDOUI ET AL.: "Biomimetic approaches for the development of non-noble metal electrocatalysts. Application to PEM water electrolysis" [Online] 13 juin 2006 (2006-06-13), , XP002538426 Extrait de l'Internet: URL:genhypem.u-psud.fr/publis/Millet_390.p df> [extrait le 2009-07-22] * alinéas [0004], [0005] *
- O. PANTANI ET AL.: "Cobalt Clathrochelate Complexes as Hydrogen-Producing Catalysts" ANGEW. CHEM., vol. 120, 13 novembre 2008 (2008-11-13), pages 10096-10098, XP002601748 DOI: 10.1002/ange.200803643
- Y. VOLOSHIN ET AL.: "Tuning a Metal's Oxidation State: The Potential of Clathrochelate Systems" ANGEW. CHEM. INT. ED., vol. 44, 21 avril 2005 (2005-04-21), pages 3400-3402, XP002601749 DOI: 10.1002/anie.200463070

## Description

La présente invention concerne une cellule électrochimique à électrolyte polymère solide, son procédé de fabrication et un empilement de plusieurs de ces cellules. Elle s'applique plus particulièrement, mais non exclusivement à l'électrolyse de l'eau pour la production d'hydrogène et d'oxygène, notamment pour l'alimentation en gaz de piles à combustible.

D'une façon générale, les cellules à électrolyte polymère solide comprennent une membrane échangeuse d'ions de faible épaisseur (200 µm environ), et une électrode métallique de chaque côté, l'une servant de cathode et l'autre d'anode. Ces électrodes sont constituées d'un collecteur (également appelé distributeur) de courant recouvert ou non en surface d'une couche catalytique placée au contact de la membrane. Il peut s'agir par exemple de plaques poreuses en titane qui laissent s'échapper les gaz produits par la réaction d'électrolyse. Les réactions qui se produisent sont les suivantes :
- à l'anode : 2 H₂O → 4 H⁺ + 4e⁻ + O₂,
- à la cathode : 4 H⁺ + 4e⁻ → 2 H₂

En électrolyse de l'eau, les électrodes sont reliées à un générateur électrique de courant continu. L'anode et la cathode sont alimentées en eau pure, c'est-à-dire en eau très fortement déminéralisée. Un dégagement d'oxygène a lieu à l'anode alors que les protons produits par la décomposition de l'eau traversent la membrane en direction de la cathode où ils sont réduits en hydrogène. Chaque proton entraîne avec lui un cortège de molécules d'eau de solvatation. Pendant l'électrolyse, il y a donc circulation permanente de protons à l'intérieur de la membrane, et transport d'eau de l'anode vers la cathode. Ce flux d'eau est appelé flux électro-osmotique. L'eau est évacuée à travers le collecteur en titane poreux en même temps que l'hydrogène gazeux.

Dans l'état de l'art, les membranes sont généralement constituées de polymères perfluorosulfonés, très stables chimiquement et électrochimiquement. Ces matériaux polymères sont constitués d'un réseau d'anions fixes et de cations mobiles ou labiles à l'intérieur de ce réseau. Les membranes NAFION ® développées par la société Dupont de Nemours sont un exemple de membrane couramment utilisée dans ce type d'application. Les anions sont des ions SO3⁻ et les cations peuvent être de natures diverses : Na⁺, K⁺, Li⁺. Pour les applications en électrolyse de l'eau, les espèces mobiles sont les protons H⁺.

Afin d'augmenter le rendement énergétique de ces cellules, les catalyseurs métalliques localisés entre la membrane et le collecteur de courant sont choisis, pour une réaction donnée, selon plusieurs facteurs :
- leur pouvoir électro-catalytique, qui varie en fonction du métal et de la surface d'échange disponible,
- leur stabilité chimique vis-à-vis de l'électrolyte acide et de la réaction, notamment du côté anodique (production d'oxygène),
- leur stabilité électrochimique en fonction du potentiel d'électrode,
- leur conductivité électronique, qui varie aussi selon la porosité de la couche catalytique,
- leur coût.

L'état de l'art en matière d'électrolyse de l'eau alcaline consiste à utiliser des catalyseurs peu onéreux à base de nickel. Mais en matière de cellules électrochimiques à électrolyte polymère solide (initialement développées en vue de réaliser des piles à combustible pour des applications spatiales), seuls des catalyseurs à base de métaux précieux (le Platine, l'Iridium, le Ruthénium, l'Or, le Rhodium ou le Palladium), ou de leurs oxydes (tels IrO₂, RuO₂), capables de résister à l'acidité des membranes polymères, sont utilisés. Elles sont donc très onéreuses.

Le choix du catalyseur se pose de manière différente du côté cathodique et du côté anodique :
- Le meilleur catalyseur connu pour le dégagement de l'Hydrogène est le Platine. Les teneurs en Platine sont de l'ordre de 0,2 à 0,5 milligramme de platine par cm² d'aire géométrique d'électrode ;
- du côté anodique (dégagement de O₂), on utilise habituellement comme catalyseur de l'Iridium, déposé directement sur la membrane et/ou sur l'électrode.

L'invention a plus particulièrement pour objectif de réduire au strict minimum la quantité de métal précieux utilisé comme catalyseur par rapport à l'état de l'art, voire de supprimer tout métal précieux, au moins sur une électrode, afin de baisser le coût des cellules d'électrolyse de l'eau à électrolyte polymère solide.

A cet effet, il est proposé en une cellule pour l'électrolyse de l'eau comportant une membrane polymère échangeuse de cations, deux électrodes situées respectivement de part et d'autre de ladite membrane, un premier catalyseur de la réduction des protons en hydrogène moléculaire placé entre la membrane et la cathode, **caractérisée en ce que** au moins une des électrodes est au moins recouverte d'une pellicule constituée d'un support à grande surface spécifique composé d'éléments présentant une taille micrométrique ou nanométrique, éléments sur chacun desquels est adsorbé ledit catalyseur.

On entend par « support à grande surface spécifique » tout support composés d'éléments présentant une taille de micrométrique, pouvant consister en du noir de carbone, ou préférentiellement d'une taille nanométrique pouvant consister d'une façon non limitative en des nanoobjets, nanostructures, nanotubes, nanoéléments, etc...

Les dispositions permettent de réduire la charge (c'est-à-dire la quantité par unité de surface exprimé en mg/cm2) de « catalyseur noble » de type métal précieux ou métal noble, tout en augmentant surface catalytique. Ainsi, à surface d'échange égale la quantité de catalyseur noble sera considérablement réduite par rapport à celle qui serait nécessaire dans les cas d'une couche homogène de catalyseur.

A titre d'exemple, la charge en catalyseur noble requise
- est comprise entre 0 et 0,01 mg/cm² à la cathode, et
- est strictement supérieur à 0 et inférieure à 0,2 mg/cm² à l'anode contre une charge retrouvée dans l'état de l'art de l'ordre de 0,5 mg/cm² de Pt à la cathode, et une charge en Iridium de l'ordre de 1 à 2 mg/cm² à l'anode.

Avantageusement, ledit premier catalyseur pourra comprendre au moins un composé appartenant à au moins l'une des familles suivantes :
- Famille des hétéropolyacides (HPA) stables en milieu aqueux,
- Famille des oximes métalliques stables en milieu aqueux,
- Des nanoparticules de Platine.

Il est proposé notamment l'utilisation de composés de la famille des HPA à la surface de la cathode, pour autant qu'ils soient stables en milieux aqueux, pour remplacer le Platine couramment utilisé dans l'état de l'art. Comme beaucoup d'entre eux sont solubles dans l'eau, l'invention propose une méthode (décrite plus loin) permettant leur utilisation dans le cadre d'une l'électrolyse de l'eau à électrolyte polymère solide et le maintien de leurs propriétés électrochimiques sur de longues durées. Par exemple, l'invention propose l'utilisation d'un acide tungstosilicique (H₄SiW₁₂O₄₀) qui est un HPA simple, disponible commercialement et qui possède une structure de Keggin. L'invention propose également des HPA de la même famille (PW₁₂ et PMo₁₂) et des HPA plus complexes du type P₂W₁₈ (structure saturée et substituée de type Dawson).

Il est proposé également des HPA à base de Palladium ou de Platine ou d'Iridium. Bien que comportant un métal noble donc plus onéreux, ils présentent la propriété de s'adsorber très fortement sous forme de monocouches à la surface de supports adéquats ce qui permet de réduire la quantité utilisée.

Alternativement, il est proposé également non pas de supprimer totalement le Platine mais de réduire drastiquement la quantité utilisée en l'utilisant sous la forme de nanoparticules adsorbées sur le support à grande surface spécifique.

Différents catalyseurs exempts de métaux nobles peuvent être utilisés pour remplacer le platine sur les cathodes. Par exemple, certains hétéropolyanion (HPA) sont connus pour catalyser la réaction de dégagement d'hydrogène en milieu acide. Un HPA est un composé qui résulte de la condensation d'oxométallates autour d'un hétéoatome et dont la formule générale est XₓMₘO_{y}ⁿ⁻ où X est l'hétéro-élément (par exemple P, As, Si) et M est le métal (par exemple W, Mo, V). Les HPA peuvent s'agencer principalement suivant deux types de structures :
- x = 1 et m = 12 correspondent à une structure dite de KEGGIN (par exemple SiW₁₂O₄₀³⁻),
- x = 2 et m = 18 correspondent à une structure dite de DAWSON (par exemple P₂W₁₈O₆₂⁶⁻).

Les HPA sont des acides très stables. Ils ont un poids moléculaire élevé, une grande solubilité dans l'eau et dans les solvants organiques, et une grande capacité de stockage et de transfert d'électrons et de protons sans changement de structure. Ils peuvent modifier de façon stable la surface des électrodes par simple adsorption.

La demande de brevet FR 2 573 779 décrit des électrodes activées à l'aide d'HPA, leur préparation et leur application, notamment comme cathode pour l'électrolyse de l'eau en milieu acide. L'objectifpoursuivi est le même, mais il ressort clairement de ce document que l'application visée pour ces électrodes est celle de l'électrolyse en milieu liquide (page 5 paragraphe 8) et non celle de l'électrolyse de l'eau à électrolyte polymère solide. De plus, la procédure utilisée pour adsorber les HPA à la surface de l'électrode de travail (polarisation cathodique à bas potentiel), est différente de celle de l'invention. Dans le cas d'un électrolyte solide, il se pose le problème de la stabilisation des HPA au voisinage des collecteurs de courant. En effet, le flux électro-osmotique provoque un lessivage de la cathode et même si les HPA sont fortement adsorbés à la surface des collecteurs, à la longue, ils se dissolvent et le rendement de la cellule se dégrade.

L'invention propose d'autres composés exempts de métaux nobles qui catalysent la réduction des protons en hydrogène.

Selon l'invention, ledit catalyseur utilisé pour la réduction des protons en hydrogène est un composé appartenant à la famille des oximes métalliques stables en milieu aqueux.

Ladite famille des oximes métalliques sont les complexe clathrochélates de formule I : 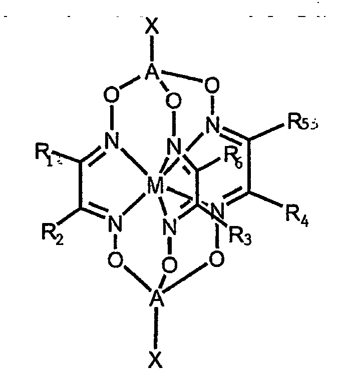 ledit complexe clathrochélate comprenant :
- un centre métallique M de la première série des éléments de transition de la classification périodique des éléments
- trois ligands glyoximate autour dudit centre métallique M chacun desdits ligands glyoximate étant substitué par un radical R¹, R², R³, R⁴, R⁵, ou R⁶ , chaque radical R¹, R², R³, R⁴, R⁵, ou R⁶ étant indépendamment un groupe alkyle ou phényle, substitué ou non.
- un atome A appartenant aux éléments du groupe 13, ledit atome étant lié aux trois ligands glyoximes,
- un radical X, ledit radical X étant un halogènure tel que notamment le fluor, ou un groupe alkyle, phényle, phényle fonctionnalisé avec un radical Y, Y étant un radical choisit dans le groupe constitué de N02, F, N2+, COOH, COOEt, N3, CHO.

Selon un mode de réalisation particulier, ledit centre métallique M est constitué de d'un métal de transition tel que :Co, Fe ou Ni.

Selon un autre mode de réalisation particulier, ledit atome A appartenant aux éléments du groupe 13 est constitué de B ou de Al, ou, d'éléments de même famille chimique ou de propriétés similaires...

Les conditions très oxydantes qui prévalent aux anodes des électrolyseurs rendent difficile l'utilisation de ces catalyseurs exempts de métaux précieux sur de longues durées pour remplacer l'Iridium. L'invention propose d'utiliser des HPA comportant des métaux précieux, qui permettent de réduire la quantité de métal précieux utilisé, tels que :
- Un HPA à base de Platine, par exemple de formule abrégée α ₂-K₈PtP₂W₁₇O₆₁,
- Un HPA à base de Palladium, par exemple de formule abrégée α ₂-K₈PdP₂W₁₇O₆₁,
- Un HPA à base d'iridium, par exemple de formule abrégée α 2-K8IrP2W17O61.

L'invention propose également d'utiliser :
- des composés moléculaires à base de Ruthénium stables en milieu aqueux tels que :
   cis,cis-[(bpy)(H₂O)Ru^{III}ORu^{III}(OH₂)(bpy)₂]⁴⁺
   cis,cis-[(phen)₂(H₂O)Ru^{III}ORu^{III}(OH₂)(phen)₂]⁴⁺
- des composés moléculaires à base de Manganèse tels que :
   [Mn₂O₂(bipy)₄](ClO₄)₃
   [Mn₂O₂(phen)₄](ClO₄)₃

L'invention propose également d'utiliser des nanoparticules d'Iridium et/ou de Ruthénium ou de leurs oxydes, qui permettent également de réduire la quantité de métal précieux utilisé.

Les anodes et cathodes pourront être obtenues :
- soit en déposant directement le catalyseur à la surface du collecteur de courant, par exemple en titane poreux,
- soit en déposant sur le collecteur de courant un support à grande surface spécifique sur lequel on aura au préalable adsorbé le catalyseur.

Par exemple, du côté cathodique, l'invention propose comme matériau support une poudre de carbone, tel que le Vulcan XC72 de la société Cabot Co (surface spécifique 250 m²/g) ou une poudre de nanotubes de carbone.

Pour diminuer les teneurs en métaux précieux, l'invention propose comme matériau un support à grande surface spécifique des nanoparticules d'oxyde de Titane sous-stoechiométrique de formule générale TiO₂₋ₓ. Alors que l'oxyde de titane est un semi-conducteur, le fait de le réduire partiellement, par exemple par de l'hydrogène, le rend conducteur électronique. Par ailleurs il peut être obtenu sous forme de poudre nanométrique et il est relativement bon marché. L'invention propose par exemple d'adsorber des nanoparticules d'Iridium ou de Ruthénium (ou de leurs oxydes) sur TiO₂₋ₓ.

L'invention propose également un procédé de fabrication d'une cellule électrochimique à électrolyte solide comportant une membrane polymère, une anode et une cathode et au moins un catalyseur entre la membrane et la cathode.

Les collecteurs de courant, par exemple en titane poreux, sont préalablement décapés de leurs oxydes superficiels, dégraissées et séchées.

Le catalyseur est ensuite solubilisé dans un solvant, par exemple de l'isopropanol.

Le mélange est pulvérisé grâce à un pulvérisateur à air comprimé sur une face d'électrode maintenue à une température d'environ 100°C degrés de façon à provoquer l'évaporation du solvant et à éviter que le catalyseur n'aille se déposer à l'intérieur du collecteur en titane poreux.

Un film polymère, par exemple de Nafion, est ensuite pulvérisé par la même méthode sur la face de l'électrode ayant reçu le catalyseur et l'électrode est séchée à une température d'environ 100°C degrés de façon à provoquer l'évaporation du solvant. Il est important que l'épaisseur du film polymère ne soit pas trop importante pour obtenir une bonne réponse électrochimique. Pour contrôler l'épaisseur du film, il convient de diluer les solutions commerciales dans un solvant tel l'isopropanol, d'un facteur 10 à 1000. Les films donnant les meilleurs résultats ont une épaisseur d'environ 100 micromètres.

L'électrode ainsi obtenue est ensuite placée dans une cellule électrochimique à trois électrodes pour activation. Elle peut être activée par voltamétrie cyclique entre 0 et - 750 mV/ECS, sous dégagement d'hydrogène dans une solution acide de concentration 10⁻²M à 1 M, avec une vitesse de balayage d'environ 5 mV/s. Au bout de quelques heures, l'activité est maximale.

La cathode est alors pressée contre une membrane polymère de type perfluorosulfonée, par exemple Nafion ou Hyflon, dans un support adapté en Titane. On fait circuler de l'eau chaude dans la cellule, environ 95°C, pendant une heure. On fait ensuite passer un courant faible, inférieur à 100 mA/cm², pendant environ 2 heures.

Enfin, on termine la préparation en soumettant la cellule à une tension constante d'environ 2 Volt pendant environ 12 heures. A la fin, l'électrode est solidaire de la membrane par imbrication des chaînes polymères du film dans la membrane. La bonne adhérence produit les meilleures performances en électrolyse.

Le procédé décrit plus haut est applicable aussi bien pour la cathode que pour l'anode.

Alternativement, l'invention propose, que ledit un support à grande surface spécifique soit notamment constitué de poudre de carbone pour la cathode ou du Ti02-x pour l'anode, ledit support à grande surface spécifique étant dispersé dans une solution de catalyseur (dans les proportions 1-1 % en volume) en utilisant un bac à ultra-sons pour assurer une bonne dispersion, de pulvériser la préparation sur le collecteur de courant, puis de déposer un film polymère protecteur.

Alternativement, l'invention propose de pulvériser sur le collecteur de courant, en une seule étape, un mélange substrat + catalyseur + solution de polymère.

Les HPA présentent également une activité vis-à-vis de l'oxydation de l'hydrogène en protons. Ils peuvent donc être utilisés dans les anodes des piles à combustibles à électrolyte solide. Les nanoparticules de platine dispersées sur le support à grande surface spécifique comme le carbone ont une grande activité vis-à-vis de la réduction de l'oxygène en eau. La cellule électrochimique innovante décrite plus haut peut donc être utilisée dans un fonctionnement en pile à combustible, à condition que les collecteurs de courant (en titane poreux) soient remplacés par des électrodes à diffusion de gaz hydrophobes, telles que celles utilisés dans l'état de l'art.

Puisque la cellule innovante peut fonctionner en mode électrolyseur et en mode pile à combustible, elle peut également être utilisée pour fonctionner en mode réversible, c'est-à-dire tantôt en mode électrolyseur, tantôt en mode pile à combustible. Les performances de tels systèmes réversibles sont optimales lorsque les catalyseurs sont spécialisés par type de processus redox plutôt que par type de gaz. Ainsi, un compartiment sert aux processus de réduction (réduction des protons en hydrogène en mode électrolyseur et réduction de l'oxygène en mode pile à combustible), et un autre aux processus d'oxydation (oxydation de l'eau en oxygène en mode électrolyseur et oxydation de l'hydrogène en protons en mode pile à combustible). Dans ce cas, il est nécessaire d'utiliser des combinaisons de catalyseurs sur chacune des deux électrodes.

Un mode particulier de préparation de la membrane et des électrodes est fourni ci après à titre d'exemple non limitatif.

### ETAPE 1 : Préparation de la membrane

Une membrane de Nafion^{®} (du Pont de Nemours) de 140µm d'épaisseur est placée dans une solution aqueuse (400 mL, eau distillée) de HN03 (10 %W) puis chauffée à 100°C pendant 30 min (y compris montée en T°C). Elle est ensuite rincée dans des bains d'eau distillée chaude (400 mL, 10 min) puis à température ambiante. Le rinçage se termine par de multiples lavages rapides à l'eau.

### ETAPE 2 : Préparation des électrodes

Matériel nécessaire d'un mode de réalisation particulier selon l'invention :
- L'anode et la cathode consistent en des disques de Ti poreux dont les caractéristiques sont les suivantes : 7cm² de surface, 3cm de diamètre, 0.85mm d'épaisseur, et une porosité de 25-28%. L'expérimentateur prendra soin d'éviter tout contact des faces avec une source potentiellement contaminante, (et notamment d'éviter le contact avec les doigts, la plaque de chauffe ou de la balance ; d'utiliser du papier machine propre comme support et de toujours saisir une électrode avec des pinces sur la tranche).

Les catalyseurs : le catalyseur anodique utilisé est de l'Iridium ; le catalyseur cathodique est un complexe colbalt-oxime. Le catalyseur cathodique de référence est du platine adsorbé sur du charbon activé (Pt/c).

Solution de Nafion: 6.5% de Nafion^{®} (du Pont de Nemours) dans l'isopropanol (iPrOH).

Quantité final de catalyseur par unité de surface (charge en catalyseur exprimée en mg/cm2): la charge finale est de 2.5 mg/cm2 de catalyseur sachant que le Nafion^{®} doit constituer 5% en masse de la couche catalytique. Soit, pour une surface de7cm2 : ajouter 17.5mg de catalyseur à 0.9 mg de solution de Nafion à 6.5% pour obtenir un poids total de 18.4 mg.
- Vaporisation du catalyseur : Le catalyseur est déposé à la surface de l'électrode par vaporisation sous pression à l'aide d'un pistolet à air comprimé.

### Protocole expérimental :

### Pesée des disques de Ti nu

La pesée des disques de Ti nu est réalisée en chauffant une plaque à 100°C sur laquelle sont déposés les disques de Ti afin d'évaporer tout solvant résiduel (eau notamment). Lorsque la pesée demeure constante au cours de plusieurs pesées successives, la masse des disques on note.

Pesée des catalyseurs et du Nafion^{®} et préparation de la solution à vaporiser
- Pour une électrode cathodique de référence : deux fois plus de platine adsorbé sur du charbon activé (Pt/c) ou trois fois plus d'iridium que de catalyseur et de solution de Nafion à 6.5% seront nécessaires du fait de la perte de matière significative au cours de la vaporisation. Le rapport de la masse de catalyseur par rapport à celle de de la solution de Nafion à 6.5% est le suivant :m_{CAT} / m_{Nafion} = 1.235, où m_{CAT} est la masse de catalyseur, et m_{Nafion} est la masse de la solution de Nafion à 6.5%.
- Pour une électrode cathodique comprenant un complexe cobalt-oxime: mélanger 50%en poids de noir de carbone et 50% en poids de complexe de cobalt-oxime.
- La solution de Nafion à 6.5% nécessaire est préalablement pesée. Dans le cas de l'électrode cathodique de référence la pesée est de 28 à 43 mg [c'est-à-dire : 2ou3x17.5/1.235]. La quantité de solution de Nafion à 6.5% ainsi obtenue est la diluée dans un peu d'isopropanol.
- La quantité de catalyseur correspondante est ensuite pesée en respectant certaines précautions, en particulier pour du platine adsorbé sur du charbon activé (Pt/c), il est nécessaire juste après la pesée de verser quelques gouttes d'eau à la poudre pour éviter qu'elle ne réagisse à l'ajout d'iPrOH.
- La solution de Nafion est versée dans le pilulier du catalyseur, puis de l'iPrOH est rajouté si nécessaire. Le mélange catalyseur + Nafion ainsi obtenu est soumis aux ultrasons (ici sonde à ultrasons) pour disperser jusqu'à obtenir une suspension homogène.

Afin de vérifier que ladite suspension homogène est obtenue, le test suivant est mis en oeuvre: le contenu du pilulier est versé dans un autre récipient il ne doit plus reste de dépôt solide au fond ou très peu.

### Mise en place de la couche catalytique sur l'électrode

- Les disques sont placés à nouveau sur la plaque chauffante à 100°C. Ainsi, le maintien des disques à cette température permet l'évaporation quasi-immédiate du solvant lorsque la solution est vaporisée sur l'électrode (ceci afin de limiter fortement la pénétration au sein du Ti poreux).
- La moitié ou le tiers de la solution du mélange catalyseur + Nafion est versé dans le réservoir du pistolet à air comprimé pour être vaporisé sur l'ensemble du disque de façon aussi homogène que possible (mouvement concentrique à ∼10cm de la plaque à débit moyen). Entre chaque spray, on laisse s'évaporer quelques secondes.
- Après vaporisation de cette première partie de la solution initiale l'échantillon est pesé.

Si la charge en catalyseur est suffisante, la vaporisation est terminée. Dans le cas contraire (probable), le reste de la solution avec re-diluée dans l'iPrOH est soniquée, et à nouveau versée pour moitié dans le réservoir du pistolet à air comprimé, pour être une seconde fois vaporisée, etc... On réitère cette opération jusqu'à ce que la charge finale souhaitée en catalyseur soit atteinte.

Des modes d'exécution seront décrits ci-après, à titre d'exemples non limitatifs, avec référence aux dessins annexés dans lesquels :
La figure 1 représente schématiquement la coupe une cellule d'hydrolyse à membrane,
Les figures 2 et 3 représentent des courbes Voltage x Densité de courant obtenues avec des catalyseurs différents.

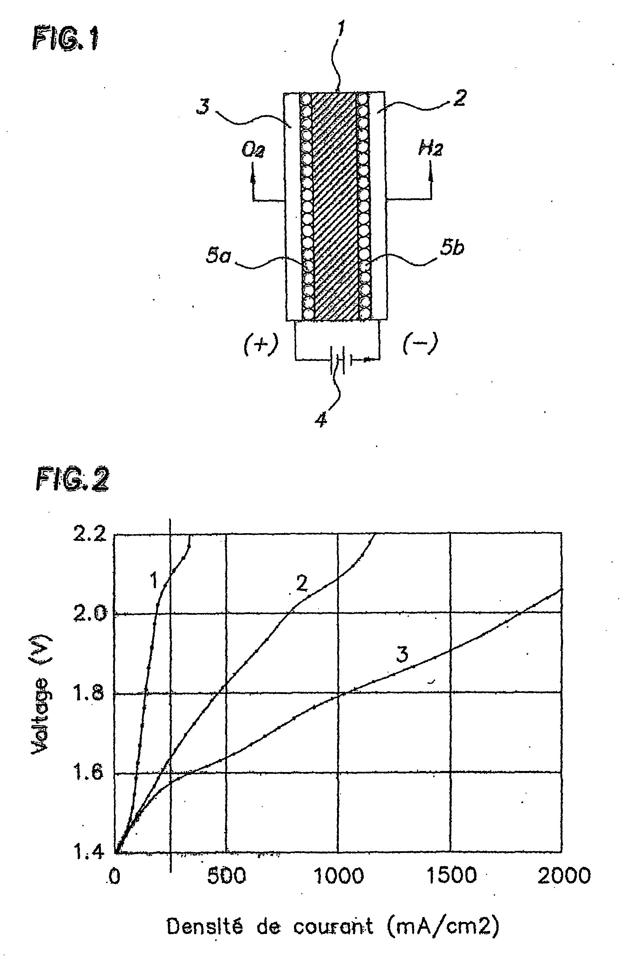

Sur la figure 1 on distingue une membrane polymère 1, par exemple en Nafion ou Hyflon, une cathode 2 et une anode 3 appliquées contre la membrane 1, en métal poreux pour permettre le dégagement des gaz H2 et 02, par exemple en Titane poreux. La cellule est alimentée par une source de courant continu 4. La cellule est alimentée en eau purifiée au niveau de la cathode 2 et de l'anode 3.

Entre la cathode 2 (respectivement l'anode 3) et la membrane 1 on distingue une couche d'un premier catalyseur 5b (respectivement second catalyseur 5a). Ces catalyseurs peuvent avoir été déposés directement sur la cathode ou sur l'anode, mais ils ont été de préférence au préalable adsorbés sur un matériau à grande surface spécifique, tel que des nanoparticules d'étain du côté anode. Dans l'état de l'art, le premier catalyseur 5b est constitué de particules de Platine et le second catalyseur 5a de particules d'Iridium.

La figure 2 illustre l'effet catalytique du Platine à la cathode et de l'Iridium à l'anode. Les lois de la thermodynamique indiquent que le voltage minimum à appliquer à une cellule d'électrolyse de l'eau fonctionnant à 25°C est de 1,23 V, ceci quelle que soit la densité de courant. A cause des résistances induites notamment par la membrane et par les électrodes, d'une part le voltage à appliquer pour le démarrage de la réaction est légèrement plus élevé (1,4 V au minimum), d'autre part il faut augmenter le voltage appliqué si on veut augmenter la densité de courant. Néanmoins la cellule sera d'autant plus performante que l'on obtiendra une densité de courant plus élevée pour un voltage donné. Les courbes de la figure 2 sont obtenues avec une membrane Nafion 115 et des électrodes en Titane et avec les catalyseurs suivants :
- courbe 1 : dépôt de carbone à la cathode et dépôt d'Iridium à l'anode (le carbone montre un léger effet catalyseur),
- courbe 2 : un cobalt - oxime Co(dpgBF₂)²⁺ adsorbé sur carbone à la cathode et Iridium à l'anode,
- courbe 3 : particules de Platine à la cathode et Iridium à l'anode.

La courbe 1 est obtenue sans catalyseur à la cathode mais avec de l'Iridium à l'anode. On voit que la densité de courant augmente très lentement avec la tension appliquée à la cellule. La courbe 3 illustre l'état de l'art avec des catalyseurs à base de métaux précieux à la cathode et à l'anode. La courbe 2 illustre l'effet catalyseur d'un cobalt-oxime dans une cellule d'électrolyse à membrane PEM. Ainsi, une densité de courant de 250 mA/cm2) nécessite une tension d'environ 2,1 V sans catalyseur (courbe 1), 1,65 V avec un catalyseur HPA (courbe 2) et 1,56 V avec des catalyseurs Platine et Iridium. On n'obtient pas d'aussi fortes densités de courant avec un catalyseur cobalt-oxime mais son coût est beaucoup plus faible que le Platine qu'il remplace.

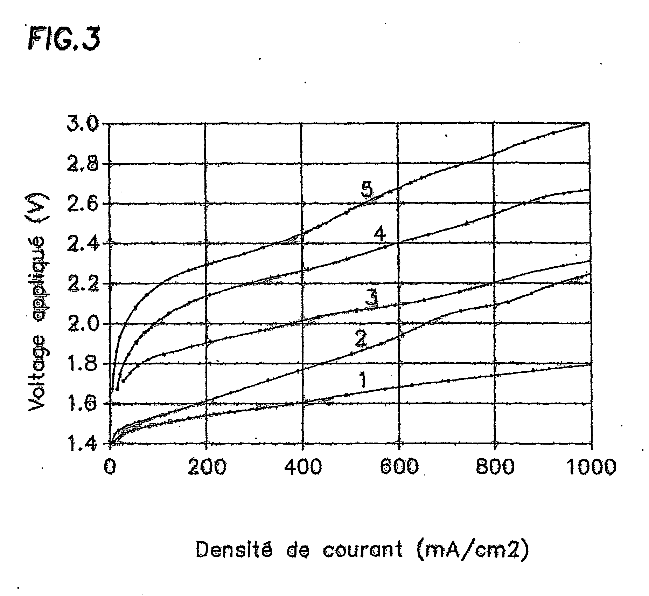

La figure 3 illustre les performances obtenues avec différents catalyseurs et une membrane Nafion 117. La courbe 1 est le résultat de l'état de l'art: catalyseur Platine à la cathode et Iridium à l'anode. La courbe 3 est un résultat obtenu avec du Platine aux deux électrodes : le Platine est un moins bon catalyseur anodique que l'Iridium. La courbe 2 illustre l'effet catalyseur du HPA : à la même température de 80°C, les résultats sont intermédiaires entre ceux des courbes 1 et 3. Encore faut-il relever que ces résultats ont été obtenus sans matériau support à grande surface spécifique tel que du noir de carbone à la cathode, il s'agit donc de performances minimum.

Les courbes 4 et 5 illustrent l'effet de la température : les performances de la cellule baissent avec la température tombe de 74 à 50°C.

Les résultats obtenus avec les différents HPA sont très proches.

## Revendications

1. Cellule pour l'électrolyse de l'eau comportant une membrane polymère échangeuse de cations (1) sensiblement plane, deux électrodes (2, 3) situées respectivement de part et d'autre de ladite membrane (1), un premier catalyseur (5b) de la réduction des protons en hydrogène moléculaire placé entre la membrane (1) et la cathode (2), soit déposé sur la cathode, soit adsorbé sur un matériau à grande surface spécifique déposé sur la cathode,
**caractérisée en ce que** ledit premier catalyseur (5b) comprend au moins un composé appartenant à la famille des complexes clathrochélates de formule I : 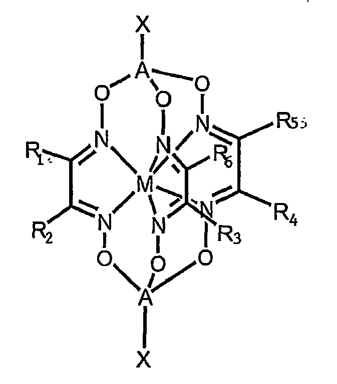 ledit complexe clathrochélate comprenant :
- un centre métallique M de la première série des éléments de transition de la classification périodique des éléments,
- trois ligands glyoximate autour dudit centre métallique M chacun desdits ligands glyoximate étant substitué par un radical R¹, R², R³, R⁴, R⁵ ou R⁶, chaque radical R¹, R², R³, R⁴, R⁵, ou R⁶ étant indépendamment un groupe alkyle ou phényle, substitué ou non.
- un atome A appartenant aux éléments du groupe 13, ledit atome étant lié aux trois ligands glyoximes,
- un radical X, ledit radical X étant un halogénure tel que notamment le fluor, ou un groupe alkyle, phényle, phényle fonctionnalisé avec un radical Y, Y étant un radical choisi dans le groupe constitué de NO₂, F, N2⁺, COOH, COOEt, N3, CHO.

2. Cellule pour l'électrolyse de l'eau selon la revendication 1,
**caractérisée en ce que** ledit centre métallique M est constitué d'un métal de transition tel que Co, Fe ou Ni.

3. Cellule pour l'électrolyse de l'eau selon l'une des revendications 1 ou 2,
**caractérisée en ce que** ledit atome A est constitué de B ou de Al.

4. Cellule pour l'électrolyse de l'eau selon l'une des revendications précédentes,
**caractérisée en ce qu'**elle comporte en outre un second catalyseur (5a) placé entre la membrane (1) et l'anode (3).

5. Cellule pour l'électrolyse de l'eau selon la revendication 4,
**caractérisée en ce que** ledit second catalyseur (5a) comprend au moins un composé choisi dans la liste suivante :
• Un HPA à base de Platine,
• Un HPA à base de Palladium,
• Un HPA à base d'Iridium,
• Un composé moléculaire du Ruthénium stable en milieu aqueux,
• Des nanoparticules d'oxyde de Ruthénium,
• Un composé moléculaire à base de Manganèse.

6. Cellule pour l'électrolyse de l'eau selon l'une des revendications 1 à 5,
**caractérisée en ce que** au moins une des électrodes (2, 3) est au moins recouverte d'une pellicule constituée d'un support à grande surface spécifique composé d'éléments présentant une taille micrométrique ou nanométrique pouvant notamment consister en des nanoobjets, nanostructures, nanotubes, nanoéléments, éléments sur chacun desquels est adsorbé ledit catalyseur (5a, 5b).

7. Cellule pour l'électrolyse de l'eau selon la revendication 6,
**caractérisée en ce que** ledit matériau à grande surface spécifique côté cathode (2) est une poudre de carbone ou des nanotubes de carbone.

8. Cellule pour l'électrolyse de l'eau selon la revendication 6,
**caractérisée en ce que** ledit matériau à grande surface spécifique côté anode (3) est un composé choisi dans la liste suivante :
• Des nanoparticules d'oxyde de Titane sous stoechiométrique,
• Des nanoparticules d'oxyde d'Etain.

9. Electrolyseur **caractérisé en ce qu'**il comprend un empilement de cellules pour l'électrolyse de l'eau selon l'une quelconque des revendications précédentes.

10. Procédé pour la préparation d'une cellule pour l'électrolyse de l'eau selon l'une des revendications 1 à 5, ledit procédé comportant les étapes consistant à :
• Solubiliser le catalyseur dans un solvant,
• Pulvériser le mélange sur une face d'électrode (2, 3) en chauffant ladite électrode,
• Pulvériser un film polymère sur ladite face de l'électrode (2, 3) ayant reçu le catalyseur en chauffant ladite électrode.

11. Procédé pour la préparation d'une cellule pour l'électrolyse de l'eau selon l'une des revendications 1 à 5, ledit procédé comportant les étapes consistant à :
• Solubiliser le catalyseur et un film polymère dans un solvant,
• Pulvériser le mélange sur une face d'électrode (2, 3) en chauffant ladite électrode.

12. Procédé selon l'une des revendications 10 ou 11 comportant en outre l'étape consistant en outre à disperser un matériau à grande surface spécifique dans la solution contenant ledit catalyseur, avant pulvérisation, de façon à adsorber ledit catalyseur à la surface dudit matériau.

13. Procédé selon l'une des revendications 10 à 12 comportant en outre une étape ultérieure d'activation de ladite électrode par voltamétrie cyclique.

14. Procédé selon l'une des revendications 10 à 13 comportant en outre les étapes ultérieures suivantes :
• Presser la face de l'électrode (2, 3) ayant reçu le catalyseur et le film polymère contre la membrane (1) de ladite cellule,
• Faire circuler de l'eau chaude dans ladite cellule,
• Faire passer un courant faible dans ladite cellule,
• Soumettre ladite cellule à une tension continue.

15. Utilisation dans une pile à combustibles d'une cellule comportant une membrane polymère échangeuse de cations (1) sensiblement plane, deux électrodes (2, 3) situées respectivement de part et d'autre de ladite membrane (1), un premier catalyseur (5b) de l'oxydation de l'hydrogène en protons placé entre la membrane (1) et la cathode (2), ledit premier catalyseur (5b) comprenant au moins un composé appartenant à la famille des clathrochélates de formule I : 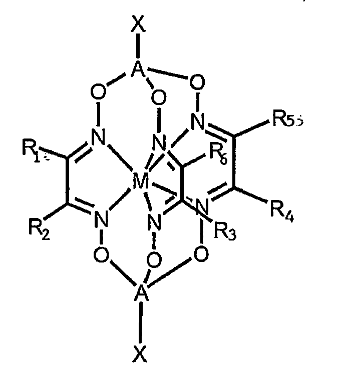 ledit complexe clathrochélate comprenant :
- un centre métallique M de la première série des éléments de transition de la classification périodique des éléments,
- trois ligands glyoximate autour dudit centre métallique M chacun desdits ligands glyoximate étant substitué par un radical R¹, R², R³, R⁴, R⁵ ou R⁶, chaque radical R¹, R², R³, R⁴, R⁵, ou R⁶ étant indépendamment un groupe alkyle ou phényle, substitué ou non.
- un atome A appartenant aux éléments du groupe 13, ledit atome étant lié aux trois ligands glyoximes,
- un radical X, ledit radical X étant un halogénure tel que notamment le fluor, ou un groupe alkyle, phényle, phényle fonctionnalisé avec un radical Y, Y étant un radical choisi dans le groupe constitué de NO₂, F, N2⁺, COOH, COOEt, N3, CHO.

16. Utilisation dans un système réversible électrolyseur - pile d'une cellule comportant une membrane polymère échangeuse de cations (1) sensiblement plane, deux électrodes (2, 3) situées respectivement de part et d'autre de ladite membrane (1), un premier catalyseur (5b) de la réduction des protons en hydrogène moléculaire placé entre la membrane (1) et la cathode (2), ledit premier catalyseur (5b) comprenant au moins un composé appartenant à la famille des clathrochélates de formule I : 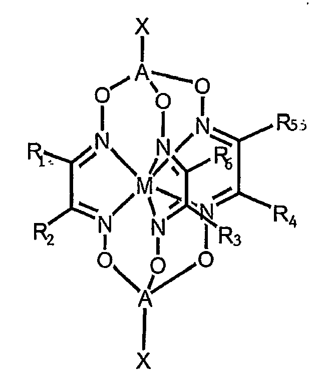 ledit complexe clathrochélate comprenant :
- un centre métallique M de la première série des éléments de transition de la classification périodique des éléments,
- trois ligands glyoximate autour dudit centre métallique M chacun desdits ligands glyoximate étant substitué par un radical R¹, R², R³, R⁴, R⁵ ou R⁶, chaque radical R¹, R², R³, R⁴, R⁵, ou R⁶ étant indépendamment un groupe alkyle ou phényle, substitué ou non.
- un atome A appartenant aux éléments du groupe 13, ledit atome étant lié aux trois ligands glyoximes,
- un radical X, ledit radical X étant un halogénure tel que notamment le fluor, ou un groupe alkyle, phényle, phényle fonctionnalisé avec un radical Y, Y étant un radical choisi dans le groupe constitué de NO₂, F, N2⁺, COOH, COOEt, N3, CHO.

## Patentansprüche

1. Wasserelektrolysezelle umfassend eine im Wesentlichen planare, polymere Kationenaustauschermembran (1), zwei Elektroden (2, 3), die jeweils auf beiden Seiten der Membran (1) angeordnet sind, einen ersten Katalysator (5b) der Reduktion der Protonen zu molekularem Wasserstoff, der zwischen der Membran (1) und der Kathode (2), entweder auf der Kathode abgeschieden oder an einem auf der Katode abgeschiedenen Material mit hoher spezifischer Oberfläche adsorbiert, angeordnet ist,
**dadurch gekennzeichnet, dass** der erste Katalysator (5b) mindestens eine Verbindung umfasst, die der Familie der Clathrochelatkomplexe der Formel I angehört: 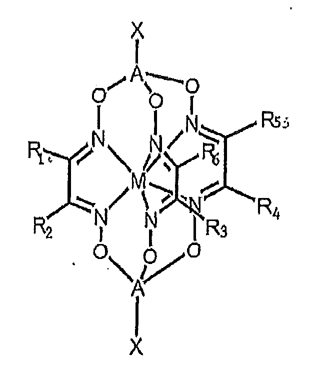 wobei der Clathrochelatkomplex folgendes umfasst:
- ein metallisches Zentrum M der ersten Gruppe der Übergangselemente des Periodensystems der Elemente,
- drei Glyoximat-Liganden um das metallische Zentrum M herum, wobei jeder der Glyoximat-Liganden mit einem Rest R¹, R², R³, R⁴, R⁵ oder R⁶ substituiert ist, wobei jeder Rest R¹, R², R³, R⁴, R⁵ oder R⁶ unabhängig eine Alkyl- oder Phenylgruppe, die substituiert ist oder nicht, ist.
- ein Atom A, das zu den Elementen der Gruppe 13 gehört, wobei das Atom mit drei Glyoxim-Liganden verknüpft ist,
- einen Rest X, wobei der Rest X ein Halogenid ist, wie insbesondere Fluor, eine Alkyl-, Phenyl-, Phenylgruppe, die mit einem Rest Y funktionalisiert ist, ist, wobei Y ein Rest ist, der aus der Gruppe ausgewählt ist, bestehend aus NO₂, F, N2⁺, CO, COOH, COOEt, N3, CHO.

2. Wasserelektrolysezelle nach Anspruch 1,
**dadurch gekennzeichnet, dass** das metallische Zentrum M aus einem Übergangsmetall, wie Co, Fe oder Ni besteht.

3. Wasserelektrolysezelle nach einem der Ansprüche 1 oder 2,
**dadurch gekennzeichnet, dass** das Atom A aus B oder Al besteht.

4. Wasserelektrolysezelle nach einem der vorhergehenden Ansprüche,
**dadurch gekennzeichnet, dass** es weiterhin einen zweiten Katalysator (5a) umfasst, der zwischen der Membran (1) und der Anode (3) angeordnet ist.

5. Wasserelektrolysezelle nach Anspruch 4,
**dadurch gekennzeichnet, dass** der zweite Katalysator (5a) mindestens eine Verbindung umfasst, die aus der folgenden Liste ausgewählt ist:
• einer HPA auf der Basis von Platin
• einer HPA auf der Basis von Palladium
• einer HPA auf der Basis von Iridium,
• einer in wässrigem Medium stabilen Molekülverbindung des Rutheniums,
• Rutheniumoxid-Nanoteilchen,
• einer Molekülverbindung auf Manganbasis.

6. Wasserelektrolysezelle nach einem der Ansprüche 1 bis 5,
**dadurch gekennzeichnet, dass** mindestens eine der Elektroden (2, 3) mindestens mit einem Film beschichtet ist, bestehend aus einem Träger mit hoher spezifischer Oberfläche bestehend aus Elementen, die eine Mikrometer- oder Nanometer-Größe aufweisen, die insbesondere aus Nanogegenständen, Nanostrukturen, Nanoröhren, Nanoelementen, Elementen, auf denen jeweils der Katalysator (5a, 5b) adsorbiert ist, bestehen können.

7. Wasserelektrolysezelle nach Anspruch 6,
**dadurch gekennzeichnet, dass** das Material mit hoher spezifischer Oberfläche auf der Kathodenseite (2) ein Kohlenstoff-Pulver oder Kohlenstoff-Nanoröhrchen ist.

8. Wasserelektrolysezelle nach Anspruch 6,
**dadurch gekennzeichnet, dass** das Material mit hoher spezifischer Oberfläche auf der Anodenseite (3) eine Verbindung ist, die aus der folgenden Liste ausgewählt ist:
• unterstöchiometrischen Titanoxid-Nanoteilchen,
• Zinnoxid-Nanoteilchen.

9. Elektrolyseur **dadurch gekennzeichnet, dass** er einen Stapel von Wasserelektrolysezellen nach einem der vorhergehenden Ansprüche umfasst.

10. Verfahren zur Herstellung einer Wasserelektrolysezelle nach einem der Ansprüche 1 bis 5, wobei das Verfahren die folgenden Schritte umfasst:
• Lösen des Katalysators in einem Lösungsmittel,
• Sprühen des Gemisches auf eine Elektrodenfläche (2, 3) unter Erwärmen der Elektrode,
• Sprühen eines Polymerfilms auf die Elektrodenfläche (2, 3) die den Katalysator aufgenommen hat, unter Erwärmen der Elektrode.

11. Verfahren zur Herstellung einer Wasserelektrolysezelle nach einem der Ansprüche 1 bis 5, wobei das Verfahren die folgenden Schritte umfasst:
• Lösen des Katalysators und eines Polymerfilms in einem Lösungsmittel,
• Sprühen des Gemisches auf eine Elektrodenfläche (2, 3) unter Erwärmen der Elektrode.

12. Verfahren nach einem der Ansprüche 10 oder 11 weiterhin umfassend den Schritt des Dispergierens eines Materials mit hoher spezifischer Oberfläche in der Lösung, die den Katalysator enthält, vor dem Sprühen, derart, dass der Katalysator an der Oberfläche des Materials adsorbiert wird.

13. Verfahren nach einem der Ansprüche 10 bis 12 weiterhin umfassend einen weiteren Schritt der Aktivierung der Elektrode durch cyclische Voltametrie.

14. Verfahren nach einem der Ansprüche 10 bis 13 weiterhin umfassend die weiteren folgenden Schritte:
• Pressen der Fläche der Elektrode (2, 3), die den Katalysator und den Polymerfilm aufgenommen hat, gegen die Membran (1) der Zelle,
• Zirkulierenlassen von heißem Wasser in der Zelle,
• Hindurchlaufenlassen eines schwachen Stroms durch die Zelle,
• Anlegen einer kontinuierlichen Spannung an die Zelle.

15. Verwendung in einer Brennstoffzelle einer Zelle umfassend eine im Wesentlichen planare polymere Kationenaustauschermembran (1), zwei Elektroden (2, 3) die jeweils auf beiden Seiten der Membran (1) angeordnet sind, einen ersten Katalysator (5b) für die Oxidation von Wasserstoff zu Protonen, der zwischen der Membran (1) und der Kathode (2) angeordnet ist, wobei der erste Katalysator (5b) mindestens eine Verbindung umfasst, die der Familie der Clathrochelatkomplexe der Formel I angehört: 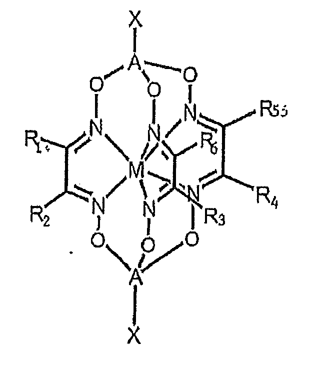 wobei der Clathrochelatkomplex folgendes umfasst:
- ein metallisches Zentrum M der ersten Gruppe der Übergangselemente des Periodensystems der Elemente,
- drei Glyoximat-Liganden um das metallische Zentrum M herum, wobei jeder der Glyoximat-Liganden mit einem Rest R¹, R², R³, R⁴, R⁵ oder R⁶ substituiert ist, wobei jeder Rest R¹, R², R³, R⁴, R⁵ oder R⁶ unabhängig eine Alkyl- oder Phenylgruppe, die substituiert ist oder nicht, ist,
- ein Atom A, das zu den Elementen der Gruppe 13 gehört, wobei das Atom mit drei Glyoxim-Liganden verknüpft ist,
- einen Rest X, wobei der Rest X ein Halogenid ist, wie insbesondere Fluor, oder eine Alkyl-, Phenyl-, Phenylgruppe, die mit einem Rest Y funktionalisiert ist, ist, wobei Y ein Rest ist, der aus der Gruppe ausgewählt ist, bestehend aus NO₂, F, N2⁺, CO, COOH, COOEt, N3, CHO.

16. Verwendung in einem reversiblen System Elektrolyseur - Batterie einer Zelle umfassend eine im Wesentlichen planare polymere Kationenaustauschermembran (1), zwei Elektroden (2, 3) die jeweils auf beiden Seiten der Membran (1) angeordnet sind, einen ersten Katalysator (5b) der Reduktion der Protonen zu molekularem Wasserstoff, der zwischen der Membran (1) und der Kathode (2) angeordnet ist, wobei der erste Katalysator (5b) mindestens eine Verbindung umfasst, die der Familie der Clathrochelatkomplexe der Formel I angehört: 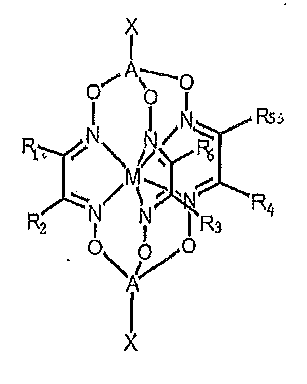 wobei der Clathrochelatkomplex folgendes umfasst:
- ein metallisches Zentrum M der ersten Gruppe der Übergangselemente des Periodensystems der Elemente,
- drei Glyoximat-Liganden um das metallische Zentrum M herum, wobei jeder der Glyoximat-Liganden mit einem Rest R¹, R², R³, R⁴, R⁵ oder R⁶ substituiert ist, wobei jeder Rest R¹, R², R³, R⁴, R⁵ oder R⁶ unabhängig eine Alkyl- oder Phenylgruppe, die substituiert ist oder nicht, ist.
- ein Atom A, das zu den Elementen der Gruppe 13 gehört, wobei das Atom mit drei Glyoxim-Liganden verknüpft ist,
- einen Rest X, wobei der Rest X ein Halogenid ist, wie insbesondere Fluor, oder eine Alkyl-, Phenyl-, Phenylgruppe, die mit einem Rest Y funktionalisiert ist, ist, wobei Y ein Rest ist, der aus der Gruppe ausgewählt ist, bestehend aus NO₂, F, N2⁺, CO, COOH, COOEt, N3, CHO.

## Claims

1. Water electrolysis cell comprising a substantially plane cation exchange polymer membrane (1), two electrodes (2, 3) situated on either side of said membrane (1), respectively, a first catalyst (5b) for reducing protons to molecular hydrogen placed between the membrane (1) and the cathode (2), either deposited on the cathode, or adsorbed on a material with a large specific surface area deposited on the cathode,
**characterised in that** said first catalyst (5b) comprises at least one compound belonging to the clathrochelate complex family according to formula I: 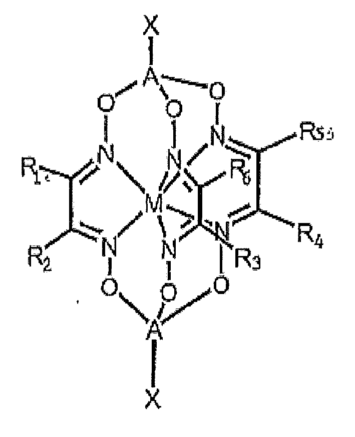 said clathrochelate complex comprising:
- a metallic centre M from the first transition element series from the periodic table of the elements,
- three glyoximate ligands about said metallic centre M, each of said glyoximate ligands being substituted by a radical R¹, R², R³, R⁴, R⁵ or R⁶, each radical R¹, R², R³, R⁴, R⁵ or R⁶ being independently an optionally substituted alkyl or phenyl group,
- an atom A belonging to the group 13 elements, said atom being bound to three glyoxime ligands,
- a radical X, said radical X being a halide such as, in particular, fluorine, or an alkyl, phenyl group or phenyl functionalised with a radical Y, where Y is a radical chosen from the group consisting of NO₂, F, N2⁺, COOH, COOEt, N3, CHO.

2. Water electrolysis cell according to claim 1, **characterised in that** said metallic centre M consists of a transition metal such as Co, Fe or Ni.

3. Water electrolysis cell according to any of claims 1 or 2, **characterised in that** said atom A consists of B or Al.

4. Water electrolysis cell according to any of the above claims, **characterised in that** it further comprises a second catalyst (5a) placed between the membrane (1) and the anode (3).

5. Water electrolysis cell according to claim 4, **characterised in that** said second catalyst (5a) comprises at least one compound chosen from the following list:
• A Platinum-based HPA,
• A Palladium-based HPA,
• An Iridium-based HPA,
• A molecular Ruthenium compound stable in aqueous media,
• Ruthenium oxide nanoparticles,
• A manganese-based molecular compound.

6. Water electrolysis cell according to any of claims 1 to 5, **characterised in that** at least one of the electrodes (2, 3) is at least coated with a film formed from a large specific surface area substrate consisting of elements having a micrometric or nanometric size, which may particularly consist of nanoobjects, nanostructures, nanotubes, nanoelements, on each whereof said catalyst (5a, 5b) is adsorbed.

7. Water electrolysis cell according to claim 6, **characterised in that** said large specific surface area material on the cathode side (2) is a carbon powder or carbon nanotubes.

8. Water electrolysis cell according to claim 6, **characterised in that** said large specific surface area material on the anode side (3) is a compound chosen from the following list:
• Substoichiometric titanium oxide nanoparticles,
• Tin oxide nanoparticles.

9. Electrolyser **characterised in that** it comprises a stack of water electrolysis cells according to any of the above claims.

10. Method for preparing a water electrolysis cell according to any of claims 1 to 5, said method comprising steps consisting of:
• Solubilising the catalyst in a solvent,
• Spraying the mixture onto one electrode face (2, 3) while heating said electrode,
• Spraying a polymer film onto said face of the electrode (2, 3) having received the catalyst, while heating said electrode.

11. Method for preparing a water electrolysis cell according to any of claims 1 to 5, said method comprising steps consisting of:
• Solubilising the catalyst and a polymer film in a solvent,
• Spraying the mixture onto one electrode face (2, 3) while heating said electrode.

12. Method according to any of claims 10 or 11 further comprising the step further consisting of dispersing a large specific surface area material in the solution containing said catalyst, before spraying, so as to adsorb said catalyst on the surface of said material.

13. Method according to any of claims 10 to 12 further comprising a subsequent step for activating said electrode by means of cyclic voltammetry.

14. Method according to any of claims 10 to 13 further comprising the following subsequent steps:
• Pressing the face of the electrode (2, 3) having received the catalyst and the polymer film against the membrane (1) of said cell,
• Circulating hot water in said cell,
• Running a weak current in said cell,
• Subjecting said cell to a continuous voltage.

15. Use in a fuel cell of a cell comprising a substantially plane cation exchange polymer membrane (1), two electrodes (2, 3) situated on either side of said membrane (1), respectively, a first catalyst (5b) for oxidising hydrogen into protons placed between the membrane (1) and the cathode (2), said first catalyst (5b) comprising at least one compound belonging to the clathrochelate complex family according to formula I: 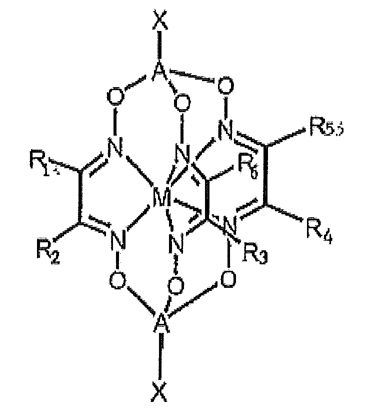 said clathrochelate complex comprising:
- a metallic centre M from the first transition element series from the periodic table of the elements,
- three glyoximate ligands about said metallic centre M, each of said glyoximate ligands being substituted by a radical R¹, R², R³, R⁴, R⁵ or R⁶, each radical R¹, R², R³, R⁴, R⁵ or R⁶ being independently an optionally substituted alkyl or phenyl group,
- an atom A belonging to the group 13 elements, said atom being bound to three glyoxime ligands,
- a radical X, said radical X being a halide such as, in particular, fluorine, or an alkyl, phenyl group or phenyl functionalised with a radical Y, where Y is a radical chosen from the group consisting of NO₂, F, N2⁺, COOH, COOEt, N3, CHO.

16. Use in a reversible electrolyser - fuel cell system of a cell comprising a substantially plane cation exchange polymer membrane (1), two electrodes (2, 3) situated on either side of said membrane (1), respectively, a first catalyst (5b) for reducing protons to molecular hydrogen placed between the membrane (1) and the cathode (2), said first catalyst (5b) comprising at least one compound belonging to the clathrochelate complex family according to formula I: 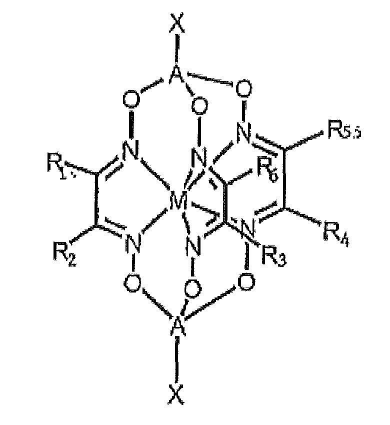 said clathrochelate complex comprising:
- a metallic centre M from the first transition element series from the periodic table of the elements,
- three glyoximate ligands about said metallic centre M, each of said glyoximate ligands being substituted by a radical R¹, R², R³, R⁴, R⁵ or R⁶, each radical R¹, R², R³, R⁴, R⁵ or R⁶ being independently an optionally substituted alkyl or phenyl group,
- an atom A belonging to the group 13 elements, said atom being bound to three glyoxime ligands,
- a radical X, said radical X being a halide such as, in particular, fluorine, or an alkyl, phenyl group or phenyl functionalised with a radical Y, where Y is a radical chosen from the group consisting of NO₂, F, N2⁺, COOH, COOEt, N3, CHO.
